(19) Europäisches Patentamt
European Patent Office
Office européen des brevets

(11) **EP 0 886 942 B1**

(12) **EUROPEAN PATENT SPECIFICATION**

(45) Date of publication and mention
of the grant of the patent:
**13.10.2004 Bulletin 2004/42**

(51) Int Cl.7: **H04L 25/49**

(86) International application number:
**PCT/GB1997/000656**

(21) Application number: **97906294.0**

(22) Date of filing: **11.03.1997**

(87) International publication number:
**WO 1997/034396 (18.09.1997 Gazette 1997/40)**

(54) **DATA TRANSMISSION USING CARRIERLESS QAM**

DATENÜBERTRAGUNG MITTELS TRÄGERFREIER QAM

TRANSMISSION DE DONNEES PAR SIGNAUX A MODULATION D'AMPLITUDE EN QUADRATURE SANS PORTEUSE

(84) Designated Contracting States:
**BE CH DE DK ES FI FR GB IE IT LI NL PT SE**

(30) Priority: **12.03.1996 EP 96301671**
**12.03.1996 GB 9605177**

(43) Date of publication of application:
**30.12.1998 Bulletin 1998/53**

(73) Proprietor: **BRITISH TELECOMMUNICATIONS**
**public limited company**
**London EC1A 7AJ (GB)**

(72) Inventor: **COOK, John, Wolsey**
**Ipswich, Suffolk IP3 8SZ (GB)**

(74) Representative: **Lloyd, Barry George William et al**
**BT Group Legal**
**Intellectual Property Department,**
**PP C5A**
**BT Centre**
**81 Newgate Street**
**London EC1A 7AJ (GB)**

(56) References cited:
WO-A-90/06022          US-A- 5 056 117

• IEEE JOURNAL ON SELECTED AREAS IN COMMUNICATIONS, vol. 13, no. 4, May 1995, NEW YORK, US, pages 620-632, XP000501258 IM ET AL.: "51.84 Mb/s 16-CAP ATM LAN standard"
• IEEE INTERNATIONAL CONFERENCE ON COMMUNICATIONS 1993, 23 - 26 May 1993, NEW YORK, US, pages 1797-1803 vol.3, XP000448432 IM & WERNER: "Bandwidth-efficient digital transmission up to 155 Mb/s over unshielded twisted pair wiring"
• IEEE GLOBAL TELECOMMUNICATIONS CONFERENCE 1990, 2 - 5 December 1990, NEW YORK, US, pages 1188-1195, XP000221017 ZERVOS: "High-speed carrierless passband transmission over the local cable network"
• IEEE GLOBAL TELECOMMUNICATION CONFERENCE 1994, 28 November 1994 - 2 December 1994, NEW YORK, US, pages 363-367, XP000488574 GANDHI ET AL.: "Wavelets for baseband coding of waveforms"
• IEEE INTERNATIONAL CONFERENCE ON COMMUNICATIONS 1994, 1 - 5 May 1994, NEW YORK, US, pages 821-825, XP000438622 SORBARA & CHUNG: "Constellation time division multiplexing for the 6Mb/s ADSL"

**Description**

The present invention is concerned with carrierless phase and amplitude transmission.

This type of transmission is known from, for example, G.- H. Im et al, "51.84 Mb/s 16-CAP ATM LAN standard", IEEE Journal on Selected Areas in Communications, vol. 13, No. 4, May 1995, New York, US, pp. 620-632, and N.A. Zervos, "High-Speed Carrierless Passband Transmission over the Local Cable Network", IEEE Global Telecommunications Conference 1990, 2-5 December, 1990, New York, USA, pp. 1188-1195. At a transmitter, two sequences of symbols to be transmitted are fed to, respectively, in-phase and quadrature passband shaping filters, whose impulse responses form a Hilbert pair. At a receiver, the two sequences are separated by a pair of adaptive filters.

According to the invention there is provided an apparatus for decoding carrierless phase/amplitude modulated signals, comprising a pair of adaptive filters for separating two components thereof, means for measuring the relative delay introduced by the filters and means for adjusting at least one of the filters so as to reduce the relative delay.

Preferably the apparatus also includes means operable to (a) calculate from the parameters of one filter of the pair the parameters of a filter having a response orthogonal to that of the one filter; and (b) replace the parameters of the other filter of the pair with the calculated parameters. Such replacement may be conditional upon comparison of the two separated components and the recognition of identity of similarity thereof.

The apparatus may also include means for detecting the presence of a predetermined signal sequence and means operable in response to absence of such detection to exchange the responses of the two filters.

In a preferred embodiment, the apparatus also includes differential decoding means for each component.

Some embodiments of the invention will now be described, by way of example, with reference to the accompanying drawings, in which:

Figure 1 is a block diagram of a transmitter and receiver illustrating carrierless phase and amplitude modulation;
Figures 2 and 3 are block diagrams of respectively a transmitter and receiver embodying the invention; and
Figure 4 is a block diagram of a filter used in the receiver of figure 3.

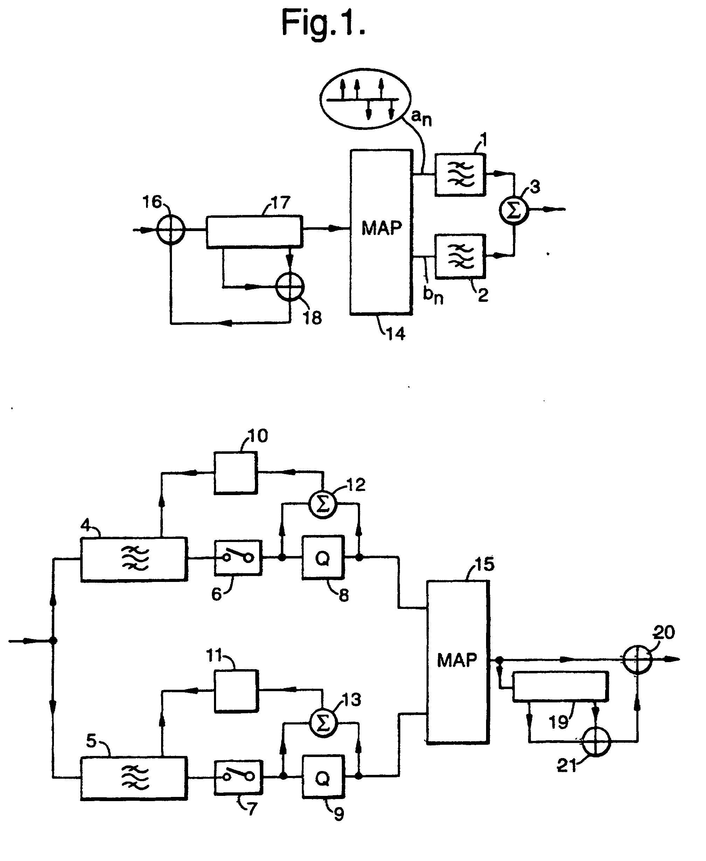

The basic principles of carrierless phase and amplitude transmission are illustrated in Figure 1. A sequence of discrete values, at intervals T, to be transmitted (signal $a_n$), idealised in the Figure as a series of impulses of +1 and -1 representing binary values 1 and 0 (though multilevel signals are also possible) is fed to a digital shaping filter 1 having an impulse response $g_a(t)$. Another such sequence $b_n$ is fed to a second shaping filter 2 having an impulse response $g_b(t)$, and the outputs of the two filters are added in an adder 3.

At a receiver, the resulting combined signal, received via some signal path, is decoded by a second pair of filters 4, 5, whose outputs are sampled by slicers 6, 7 synchronously with the original impulse period $T$ (by synchronisation arrangements, not shown), followed by decision devices 8, 9 which quantise the signal to the permitted levels ($\pm 1$ in this example). Each of the filters operates at a sampling rate substantially in excess of 1/T, e.g. 4/T. That the two signal sequences can be separated effectively will be demonstrated as follows.

If at some instant $iT$ the first and second sequences contain an impulse of amplitude $a_i$ and $b_i$ respectively then the outputs of the filters 1, 2 are $a_i.g_a(t-iT)$ and $b_i.g_b(t-iT)$. The general form for the signal $s(t)$ at the output of the adder 3 is:

$$s(t) = \sum_{i=-\infty}^{\infty} \left( a_i g_a(t-iT) + b_i g_b(t-iT) \right). \quad\text{..........................................................} (1)$$

Suppose that this signal is received without distortion (or after distortion in transmission and equal and opposite equalisation) and that the receive filters 4, 5 have impulse responses $h_a(t)$ and $h_b(t)$. We can use the convolution integral to calculate the output of each of these receive filters $(r_a(t)$ and $r_b(t)$ respectively) as a function of time. The equation for $r_a$ is given below and that for $r_b$ can be derived similarly:

$$r_a(t) = \int_{-\infty}^{\infty} s(\tau)\, h_a(t-\tau)\, d\tau$$

$$r_a(t) = \int_{-\infty}^{\infty} \sum_{i=\infty}^{\infty} (a_i\, g_a(\tau - iT) + b_i\, g_b(\tau - iT))\; h_a(t-\tau)\; d\tau$$

(2)

$$r_a(t) = \sum_{i=-\infty}^{\infty} \int_{-\infty}^{\infty} ((a_i\, g_a(\tau - iT) + b_i\, g_b(\tau - iT)) h_a(t-\tau))\, d\tau$$

$$r_a(t) = \sum_{i=-\infty}^{\infty} \int_{-\infty}^{\infty} (a_i\, g_a(\tau - iT) h_a(t-\tau) + b_i\, g_b(\tau - iT) h_a(t-\tau))\, d\tau$$

At the output of the slicer 6 we need concern ourselves with the value of $r_a$ only at discrete intervals $jT$:

$$r_a(jT) = \sum_{i=-\infty}^{\infty} \int_{-\infty}^{\infty} (a_i\, g_a(\tau - iT) h_a(jT - \tau) + b_i\, g_b(\tau - iT) h_a(jT - \tau))\; d\tau$$

...........................................................................................................................(3)

If the receive fitter response $h_8$ is so chosen that the following relationships are true:

$$\int_{-\infty}^{\infty} (g_a(\tau - iT) h_a(jT - \tau))\; d\tau \quad \begin{array}{l} = 1 \; if \; i = j \\ = 0 \; if \; i \neq j \end{array}$$ ......................................(4)

$$\int_{-\infty}^{\infty} (g_b(\tau - iT) h_a(jT - \tau))\; d\tau \; \equiv 0$$ ........................................................(5)

Then $r_a(jT) = a_j$.
In a similar way if the receive fitter $h_b$ is so chosen that the following relationships are true:

$$\int_{-\infty}^{\infty} (g_a(\tau - iT) h_b(jT - \tau))\; d\tau \; \equiv 0$$ ........................................................(6)

$$\int_{-\infty}^{\infty} (g_b(\tau - iT) h_b(jT - \tau))\; d\tau \quad \begin{array}{l} = 1 \; if \; i = j \\ = 0 \; if \; i \neq j \end{array}$$ ......................................(7)

Then $r_b(jT) = b_j$.

In this way it is possible to determine the original sequences sent without interference between elements of the same sequences or between sequences.

Note that the infinite limits on the integrations are theoretically necessary if any of the impulse responses is infinite, but in practice can be truncated provided that the significant terms of the relevant impulse responses are included.

It is possible to find $h_a$ and $h_b$ with the required properties provided that $g_a$ and $g_b$ are chosen such that

$$\int_{-\infty}^{\infty} \left( g_a(\tau - iT)\dot{g}_b(\tau) \right) \, d\tau \equiv 0 \text{ for all i} \dots\dots\dots\dots\dots\dots\dots\dots\dots\dots \text{(8)}$$

This is an extension of the orthogonality property (which would require the truth of this only for i=0).

in this case by substituting $h_a(t) \equiv g_a(-t)$ and $h_b(t) \equiv g_b(-t)$ (i.e. by using filters in the receiver which are matched to the transmit filters) into equations 4,5,6,7 we obtain the reduced requirements of equations 8, 9 and 10:

$$\int_{-\infty}^{\infty} \left( g_a(\tau - iT)g_a(\tau) \right) \, d\tau \quad \begin{array}{l} = 1 \; if \; i = 0 \\ = 0 \; if \; i \neq 0 \end{array} \dots\dots\dots\dots\dots\dots\dots\dots \text{(9)}$$

$$\int_{-\infty}^{\infty} \left( g_b(\tau - iT)g_b(\tau) \right) \, d\tau \quad \begin{array}{l} = 1 \; if \; i = 0 \\ = 0 \; if \; i \neq 0 \end{array} \dots\dots\dots\dots\dots\dots\dots\dots \text{(10)}$$

Suitable filters are those forming a Hilbert transform pair (with frequency responses $H(\omega)$ and $jH(\omega)$ where $j^2 = -1$).

Systems of this kind are however rather sensitive to channel distortion and noise and it is necessary to use receiver filters 4, 5 having impulse responses $G_a(t)$, $G_b(t)$ which depend not only of the characteristics of the filters 1, 2 but also on the characteristics of the signal path (i.e. they represent the combined effect of the matched responses $g_a(t)$, $g_b(t)$ and the channel equalisation). This can be achieved by using an adaptive filter approach in which a control arrangement 10 (or 11) receives from a subtractor 12 (or 13) the difference between the input and output of the decision device 8 (or 9) and apply an adaptation algorithm such as the Wiener least mean squares algorithm to the relevant filter 4 (or 5) so as to minimise this difference, with the filters 4, 5, converging to the desired responses $G_a(t)$, $G_b(t)$.

A symbol mapper 14 is also shown, which receives binary signals (i.e. 0's and 1's) in bit-serial form, and converts these into the two sequences to be fed to the shaping filters. In its simplest form, this would divert alternate bits to the two channels and translate 0's and 1's into ±1. A reverse mapping occurs in a symbol mapper 15 at the receiver.

Bits for coding are supplied to the symbol mapper 14 via a scrambling arrangement, for example in the form of a self-synchronising pseudo-random sequence generator in which bits are combined serially in an exclusive-or gate 16 with feedback obtained from a 22-bit serial-in parallel-out shift register 17. The feedback is obtained via an exclusive-or gate 18 connected to receive the outputs of the first and 22nd stages of the shift register 17, which takes its input from the output of the exclusive-or gate 16. The function of this scrambling is to decorrelate the signal, to permit satisfactory operation of the adaptive filters at the receiver. A corresponding descrambler is provided at the receiver, with the output of the mapping unit 15 feeding a further serial-in parallel-out shift register 19 and being then combined in an exclusive-or gate 20 with the output of an exclusive-or gate 21 connected to receive the outputs of the 1st and 22nd stages of the shift register 19.

Unfortunately, certain cases of misconvergence of the filters 4 and 5 can arise:

(1) -one or both of the filters converges to $-G_a(t)$ or $-G_b(t)$ thereby producing an inverted output;
(2) -one or both of the filters may converge to a response which is time-shifted so that the output signal is delayed (or advanced) by a multiple of T.
(3) -the two filters 4, 5, may converge to the same response so that both channels produce (for example) signals $r_a(t)$ and the other signal sequence $r_b(t)$ is not recovered;
(4) -the filters 4,5, converge to responses $G_b(t)$ and $G_a(t)$ respectively so that the channels are transposed;

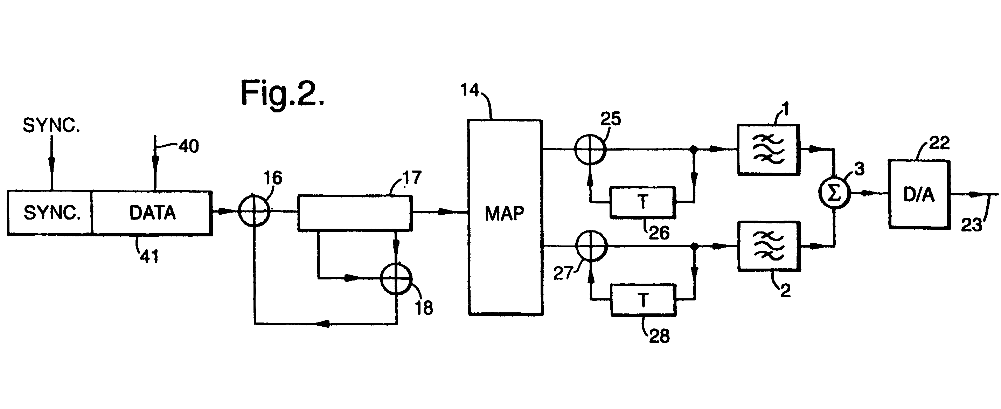

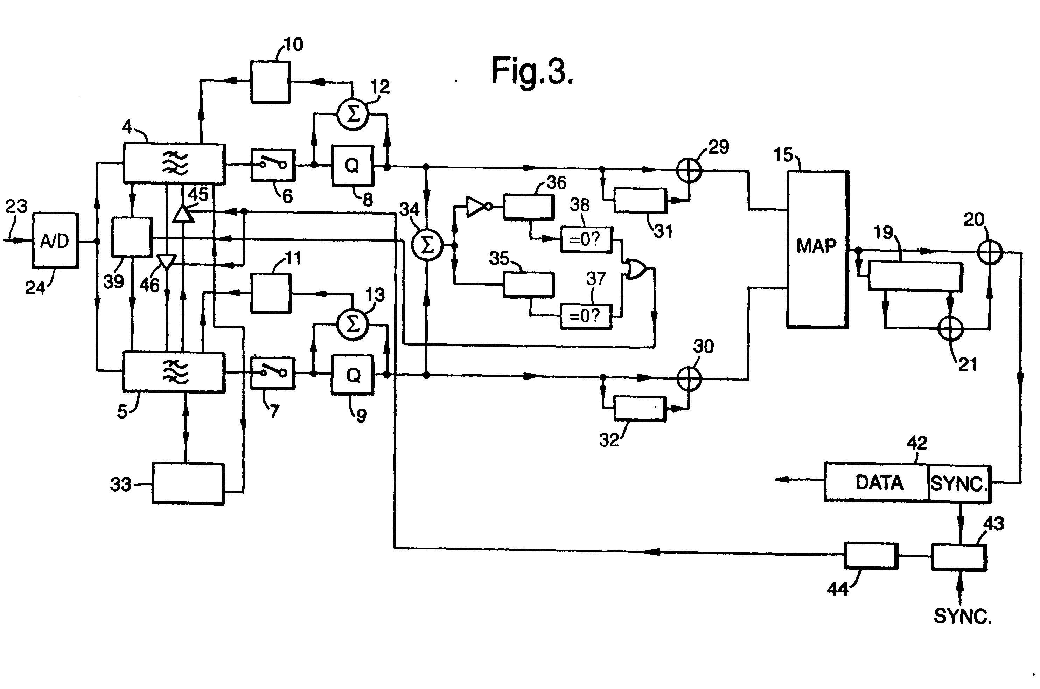

Figures 2 and 3, depicting respectively a transmitter and a receiver, show an arrangement in which provision is made to alleviate these problems. Items 1 to 21 perform the same functions as in Figure 1. It is assumed that all processing is performed digitally; thus, the transmitter has a digital-to-analogue converter 22 for transmission over an analogue line 23 and the receiver has an analogue-to-digital converter 24. In this example, a symbol rate of 6Msymbol/sec is assumed (i.e. T = 167 ns), with each symbol carrying a single bit on each of its two channels - giving a bit rate of $6 \times 2 = 12$ Mbit/s. The output of filters 1, 2 and the inputs of filters 3, 4 operate at four times the bit rate, i.e. at 6 x 4 = 24 Msamples/s. The filters 1, 2 are typically digital transversal filters with 16 taps, and the filters 4, 5 with 32 taps. A typical resolution for the filters D/A and A/D converters might be 10 bits.

In order to avoid errors in the received signal due to convergence of the filter 4 and/or 5 to a response producing a negative output, differential coding is employed. Thus the input to the shaping filter 1 is obtained from the symbol mapper 14 via a differential coding arrangement comprising an exclusive-or gate 25 and a feedback delay line 26 of delay duration T, whilst a similar arrangement with an exclusive-or gate 27 and delay line 28 is provided at the input of the shaping filter 2. Note that the differential coding is applied only to the sign bit of the sample. The corresponding differential decoders at the receiver have an exclusive-or gates 29, 30 and delay lines 31, 32.

The condition corresponding to an unwanted time-shift in one or both of the filters 4, 5 is recognised, and corrected, by the following steps:

(a) calculate the group delay $d_R$ of the filter 4;
(b) if the delay is less than 10 or greater than 14 taps, then shift the filter coefficients by an amount sufficient to correct this - i.e. a shift $k_R = 4.\text{Round}[(d_R-d_D)/4]$, where "Round[x]" means "the nearest integer to x" and $d_D$ is the desired or target delay, typically 12 taps;
(c) calculate the group delay do of the filter 5;
(d) if the delay $d_Q$ is not within $\pm 2$ of the corrected delay $d_R$ of the filter 4, then shift the coefficients of the filter 5 by a shift $k_Q = 4.\text{Round}[(d_Q - d_R)/4]$.

Of course, the group delay is not, in general, independent of frequency; in practice however it is found sufficient if the group delay is calculated at a frequency at or near the middle of the pass-band of the filter.

The calculation and shifting operation is shown in Figure 3 as performed by a processing unit 33, connected to receive the filter coefficients $c_{Ri}$, $c_{Qi}$ (i =1...n where n is number of filter taps) from, and return them to, the filters 4,5. In practice it would be more convenient to employ a single digital signal processing device to perform not only this function but also the filtering, quantising and testing operations.

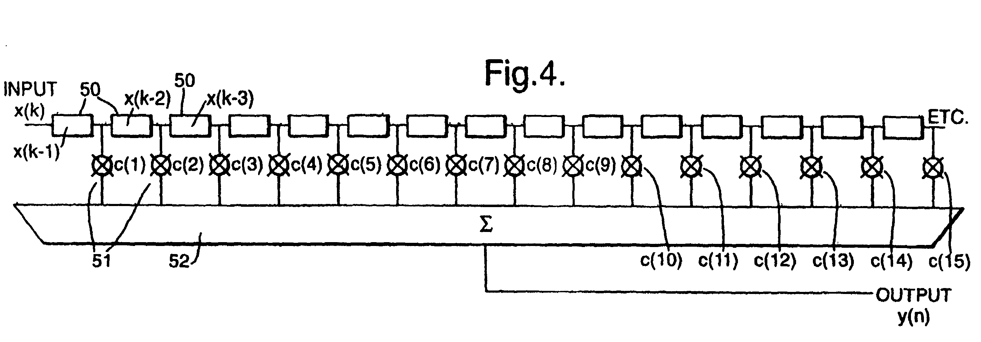

One possible algorithm for computing the group delay will now be described. The structure of the filter 4 or 5 is shown in Figure 4 where we have a finite impulse response filter with delays 50, of duration T/4 supplying 32 delayed versions of input samples x, with multipliers 51 multiplying them by coefficients $c_i$, the products being added in an adder 52.

A good indicator of the signal delay can be calculated from the formal group delay d(ω) of the filter defined as:

$$d(\omega) = -\frac{\partial \Phi(\omega)}{\partial \omega} \tag{11}$$

where $\Phi(\omega)$ is the phase response of the filter.
According to accepted theory the transmission response G(ω) of a FIR filter is given by:

$$G(\omega) = \sum_{i=1}^{n} c_i z^i \quad \text{...............................................................................(12)}$$

where the $c_i$ are the coefficients in the figure and z represents the behaviour of a single delay element.

The delay z can alternatively be represented in terms of its real (in-phase) and imaginary (quadrature) response components to a sinusoidal stimulus at angular frequency ω as:

$$z = \cos(\omega) - j \sin(\omega \tag{13}$$

Demoivre's rule then gives:

$$z^{i} = \cos(i\omega) - j\sin(i\omega) \tag{14}$$

This can be substituted into the expression for $G(\omega)$ giving:

$$G(\omega) = \sum_{i=1}^{n} c_i (\cos(i\omega) + j\sin(i\omega)) \quad\dots\dots\dots\dots\dots\dots\dots\dots\dots\dots\dots\dots\dots\dots\dots\dots (15)$$

The real and imaginary parts of this expression can then be separated:

$$G(\omega) = \sum_{i=1}^{n} c_i \cos(i\omega) + j\sum_{i=1}^{n} c_i \sin(i\omega) \quad\dots\dots\dots\dots\dots\dots\dots\dots\dots\dots\dots\dots\dots\dots (16)$$

And the phase response $\Phi(\omega)$ obtained as $\tan^{-1}$ (imaginary part/real part):

$$\Phi(\omega) = \tan^{-1}\left(\frac{\sum_{i=1}^{n} c_i \sin(i\omega)}{\sum_{i=1}^{n} c_i \cos(i\omega)}\right) \quad\dots\dots\dots\dots\dots\dots\dots\dots\dots\dots\dots\dots\dots\dots (17)$$

By differentiation of this expression using the function of a function and quotient rules is possible to obtain a closed form expression for the group delay of the filter:

$$d(\omega) = \frac{\sum_{i=1}^{n} c_i \sin(i\omega) \sum_{i=1}^{n} i c_i \sin(i\omega) + \sum_{i=1}^{n} c_i \cos(i\omega) \sum_{i=1}^{n} i c_i \cos(i\omega)}{\left(\sum_{i=1}^{n} c_i \sin(i\omega)\right)^2 + \left(\sum_{i=1}^{n} c_i \cos(i\omega)\right)^2} \tag{18}$$

This expression contains six sums of products, but only four of them are unique, which we will name $S0_n$, $S1_n$, $C0_n$ and $C1_n$:

$$SO_n = \sum_{i=1}^{n} c_i \sin(i\omega)$$

$$S1_n = \sum_{i=1}^{n} i c_i \sin(i\omega)$$

$$\dots\dots\dots\dots\dots\dots\dots\dots\dots\dots\dots\dots\dots\dots\dots\dots\dots\dots\dots\dots(19)$$

$$CO_n = \sum_{i=1}^{n} c_i \cos(i\omega)$$

$$C1_n = \sum_{i=1}^{n} i c_i \cos(i\omega)$$

The group delay can then be expressed as:

$$d(\omega) = \frac{N_n}{D_n} \tag{20}$$

where:

$$N_n = SO_n S1_n + CO_n C1_n$$
$$D_n = SO_n^2 + CO_n^2$$

$$\dots\dots\dots\dots\dots\dots\dots\dots\dots\dots\dots\dots\dots\dots\dots\dots\dots(21)$$

All the above allows the calculation of the filter delay as a function of frequency, $\omega$. For the purpose of deciding if the delay of a filter is "good" or "bad" or the delay of a pair of filters is "equal" or "unequal" it is desirable to reduce the metric of delay to a single number. There are many ways in which this can be done, taking the average over a range of frequencies, the rms value, the median or some other compromise. In practice it is often sufficient to evaluate the delay at a single point frequency somewhere near the middle of the filter passband. This could be any frequency, but in wideband applications a particularly convenient frequency will often be half the Nyquist frequency, i.e. $\omega=\pi/2$. To demonstrate the convenience of this we break the summations for S0, S1, C0 and C1 into sub-ranges, substituting $\omega=\pi/2$:

$$SO_n = \sum_{i=0}^{n/4-1} \sum_{k=1}^{4} c_{4i+k} \sin((4i+k)\pi/2)$$

$$S1_n = \sum_{i=0}^{n/4-1} \sum_{k=1}^{4} (4i+k) c_{4i+k} \sin((4i+k)\pi/2)$$

$$\dots\dots\dots\dots\dots\dots\dots\dots\dots\dots\dots(22)$$

$$CO_n = \sum_{i=0}^{n/4-1} \sum_{k=1}^{4} c_{4i+k} \cos((4i+k)\pi/2)$$

$$C1_n = \sum_{i=0}^{n/4-1} \sum_{k=1}^{4} (4i+k) c_{4i+k} \cos((4i+k)\pi/2)$$

In general this can only be done when n is a multiple of 4, but the same method can generally be used by fictitiously extending the coefficient set to the next multiple of 4 by supplying extra coefficients of value zero.

The increments in the arguments of the trigonometric functions $2\pi i$ have no effect on their values so can be dropped.

The remaining argument, $k\pi/2$, results in only two simple non-zero values under the inner summation, so the above expressions can be simplified:

$$SO_n = \sum_{i=0}^{n/4-1} c_{4i+1} - c_{4i+3}$$

$$S1_n = \sum_{i=0}^{n/4-1} (4i+1)c_{4i+1} - (4i+3)c_{4i+3}$$

$$CO_n = \sum_{i=0}^{n/4-1} -c_{4i+2} + c_{4i+4} \qquad \ldots\ldots\ldots\ldots\ldots\ldots\ldots\ldots\ldots\ldots\ldots\ldots\ldots\ldots\ldots(23)$$

$$C1_n = \sum_{i=0}^{n/4-1} -(4i+2)c_{4i+2} + (4i+4)c_{4i+4}$$

The above method of calculations reduces the problem to a few additions, four multiplications and one division, a calculation easily performed by most modern signal processing devices.

Below is a Fortran code fragment for making the delay calculation (where i is four times the index i used in equation 18):

```
s0=0

s1=0

c0=0

c1=0

do i=0,n-4,4
      s0=s0+       c(i+1)-       c(i+3)
      s1=s1+(i+1)*c(i+1)-(i+3)*c(i+3)
      c0=c0-       c(i+2)+       c(i+4)
      c1=c1-(i+2)*c(i+2)+(i+4)*c(i+4)
enddo
del=(s0*s1+c0*c1)/(s0*s0+c0*c0)
```

In order to detect the condition that filters 4 and 5 have converged to similar or identical responses, a comparison is made between the outputs of the quantisers 8, 9 to determine whether the two symbol sequences output by the quantisers are identical. A second comparison is made to determine whether one is the complement of the other (implying that the two filters are substantially the same but differ in the sign of their coefficients). Necessarily of course the results of these comparisons are useful only after correction of any time shift.

Thus a comparator 34 compares the two sequences bit by bit and if the two bits are different increments a counter 35, so that if the bits are continuously identical the counter remains at zero. Similarly if the two bits are the same a counter 36 is incremented, so that if the bits are continuously different the counter remains at zero. Detectors 37, 38 detect whether, after a period of 4ms, either counter is at zero and if so initiate a process of downloading the coefficients from one filter (e.g., as shown, the filter 4), calculating the Hilbert transform of the coefficients and loading these into the filter 5 to replace its existing coefficients. This function is performed by a calculating unit 39, but could be incorporated into the unit 33. In this example each symbol carries only one bit per channel; if a group of bits is carried, then the comparator 34 will need to compare bit groups.

It would in fact be possible to dispense with the test and, upon start-up of the receiver and after convergence of the filter 4, to perform unconditionally this copying process. This is not the preferred method, since it would not permit recognition of misconvergence during subsequent operation; a periodic such transfer would solve this, but with the penalty that since, under practical conditions, a Hilbert transform copy of the other filter's coefficients is likely, due to imperfections in the system, to be non-optimum and therefore to result in a brief period of non-optimum operation while the filter reconverges. (If the margins built into a particular system are such that a copy is acceptable, one could of course perform this copy routinely and dispense altogether with the adaptation arrangements for the filter 5).

Detection of transposition of the channels is performed with the aid of a predetermined bit sequence included in the data. This will be referred to as a synchronising word on the basis that it can also be used for frame sychronisation, though this is, in the present context, incidental. Thus the transmitter of figure 2 receives input data at an input 40 and formats them into a data frame in a register 41 along with the synchronising word occupying the first 64 bits of a 1920-bit frame. The receiver of figure 3 reassembles the frame in a register 42 and a sync detector 43 compares, at instants determined by frame clock pulses synchronised (by conventional means, not shown) to this framing structure, the last 40 bits of the sync portion of the register contents (to allow ample time for synchronisation of the descramblers) with the predetermined bit sequence.

A timer 44 is reset each time the synchronising bits are recognised and produces a "sync fail" output if the synchronising bits are absent for a preset timeout period (e.g. 32 ms). If loss of synchronisation is recognised, this is assumed to indicate channel transposition and a process is initiated in which the coefficients of the filter 4 are copied across to the filter 5 and those of the filter 5 copied across to the filter 4. This is illustrated in figure 3 as performed by gates 45,46.

These various monitoring and correction processes have been described as if they occurred continuously; in practice however they require digital computation and therefore occur cyclically. As briefly alluded to earlier, the processes of comparing results, and copying or recalculating filter coefficients - indeed the entire filtering and filter adaptation process- may be performed by a single digital signal processing device, suitably programmed. Typically such a device could perform such a cycle every 4 ms, which is found in practice to be more than adequate to achieve rapid convergence to normal operation following start-up or some disturbance.

Finally it should be noted that (unless shifted versions of the channels are also compared) checking for identity or similarity of channels must take place after the correction of relative time shifts in the filters 4 and 5 (it could also occur before, but would not provide meaningful results). Similarly, use of the "sync fail" signal to initiate transposition of filter responses must (subject to the same proviso) occur after any correction of identity or similarity of channels.

**Claims**

1. An apparatus for decoding carrierless phase/amplitude modulated signals, comprising a pair of adaptive filters (4, 5) for separating two components thereof, **characterised by** means (33) for measuring the relative delay introduced by the filters and adjusting at least one of the filters so as to reduce the relative delay.

2. An apparatus according to claim 1 further including means (39) operable to

    (a) calculate from the parameters of one filter of the pair the parameters of a filter having a response orthogonal to that of the one filter; and
    (b) replace the parameters of one filter of the pair with the calculated parameters.

3. An apparatus according to claim 2 comprising means (34) for comparing the two components and means (35-38) operable to recognise identity or similarity thereof and to control the calculating and replacing means (39) so that the parameter replacement is conditional upon such recognition.

4. An apparatus according to claim 2 or 3 in which the calculating and replacing means (39) are connected to receive parameters from one filter (4) of the pair and to insert the calculated parameters into the other fitter (5) of the pair.

5. An apparatus according to any one of claims 1 to 4 further including means (43) for detecting the presence of a predetermined signal sequence and means (44,45,46) operable in response to absence of such detection to exchange the responses of the two filters.

6. An apparatus according to claim 5 including timer means (44) operable to effect such exchange only in the event that the absence persists for a preset period.

7. An apparatus according to any one of the preceding claims including differential decoding means (29,31; 30,32) for each component.

8. An apparatus according to claim 7 in which the differential decoding means (29,31; 30,32) is operable to apply differential decoding only to a sign bit of the respective component.


**Patentansprüche**

1. Vorrichtung zum Decodieren von trägerfreien phasen/amplitudenmodulierten Signalen, die ein Paar adaptiver Filter (4, 5) zum Trennen zweier Komponenten hiervon umfasst, **gekennzeichnet durch** Mittel (33) zum Messen der relativen Verzögerung, die **durch** die Filter eingeführt wird, und zum Einstellen wenigstens eines der Filter, um die relative Verzögerung zu verringern.

2. Vorrichtung nach Anspruch 1, ferner mit Mitteln (39), die so betreibbar sind, dass sie

(a) aus den Parametern eines bestimmten Filters des Paars die Parameter eines Filters berechnen, das ein Antwortverhalten hat, das zu jenem des einen bestimmten Filters senkrecht ist; und
(b) die Parameter eines bestimmten Filters des Paars durch die berechneten Parameter ersetzen.

3. Vorrichtung nach Anspruch 2, die Mittel (34) zum Vergleichen der zwei Komponenten und Mittel (35-38), die so betreibbar sind, dass sie die Gleichheit oder Ähnlichkeit hiervon erkennen und die Berechnungs- und Ersetzungsmittel (39) in der Weise steuern, dass die Parameterersetzung von einer solchen Erkennung abhängt, umfasst.

4. Vorrichtung nach Anspruch 2 oder 3, bei der die Berechnungsund Ersetzungsmittel (39) so angeschlossen sind, dass sie Parameter von einem bestimmten Filter (4) des Paars empfangen und die berechneten Parameter in das andere Filter (5) des Paars einfügen.

5. Vorrichtung nach einem der Ansprüche 1 bis 4, ferner mit Mitteln (43), die das Vorhandensein einer vorgegebenen Signalfolge erfassen, und mit Mitteln (44, 45, 46), die in Reaktion auf das Fehlen einer solchen Erfassung die Antworten der beiden Filter vertauschen.

6. Vorrichtung nach Anspruch 5, mit Zeitgebermitteln (44), die so betreibbar sind, dass sie ein solches Vertauschen nur dann bewirken, wenn das Fehlen über eine im Voraus festgelegte Zeitdauer fortbesteht.

7. Vorrichtung nach einem der vorhergehenden Ansprüche, mit differentiellen Decodierungsmitteln (29, 31; 30, 32) für jede Komponente.

8. Vorrichtung nach Anspruch 7, bei der die differentiellen Decodierungsmittel (29, 31; 30, 32) so betreibbar sind, dass sie eine differentielle Decodierung nur auf ein Vorzeichenbit der jeweiligen Komponente anwenden.


**Revendications**

1. Dispositif destiné à décoder des signaux modulés en phase/en amplitude sans porteuse, comprenant une paire de filtres adaptatifs (4, 5) destinés à séparer deux composantes de ceux-ci, **caractérisé par** un moyen (33) destiné à mesurer le retard relatif introduit par les filtres et à régler au moins l'un des filtres de manière à réduire le retard relatif.

2. Dispositif selon la revendication 1, comprenant en outre un moyen (39) pouvant être mis en oeuvre pour

(a) calculer à partir des paramètres d'un premier filtre de la paire les paramètres d'un filtre présentant une réponse orthogonale à celle du premier filtre, et
(b) remplacer les paramètres du premier filtre de la paire par les paramètres calculés.

3. Dispositif selon la revendication 2, comprenant un moyen (34) destiné à comparer les deux composantes et des moyens (35 - 38) pouvant être mis en oeuvre pour reconnaître l'identité ou la similarité de celles-ci et pour commander le moyen de calcul et de remplacement (39) de sorte que le remplacement des paramètres dépende d'une telle reconnaissance.

**4.** Dispositif selon la revendication 2 ou 3, dans lequel le moyen de calcul et de remplacement (39) est relié afin de recevoir des paramètres d'un premier filtre (4) de la paire et pour insérer les paramètres calculés dans l'autre filtre (5) de la paire.

**5.** Dispositif selon l'une quelconque des revendications 1 à 4 comprenant en outre un moyen (43) destiné à détecter la présence d'une séquence de signal prédéterminée et des moyens (44, 45, 46) pouvant être mis en oeuvre en réponse à l'absence d'une telle détection pour échanger les réponses des deux filtres.

**6.** Dispositif selon la revendication 5 comprenant un moyen de temporisateur (44) pouvant être mis en oeuvre pour n'effectuer un tel échange que dans le cas où l'absence persiste pendant une période préétablie.

**7.** Dispositif selon l'une quelconque des revendications précédentes comprenant des moyens de décodage différentiel (29, 31 ; 30, 32) pour chaque composante.

**8.** Dispositif selon la revendication 7 dans lequel les moyens de décodage différentiel (29, 31 ; 30, 32) peuvent être mis en oeuvre pour appliquer un décodage différentiel seulement à un bit de signe de la composante respective.

# Fig.1.

Fig.2.

EP 0 886 942 B1

13

Fig.3.

Fig.4.

EP 0 886 942 B1